# EUROPEAN PATENT SPECIFICATION

(11) **EP 2 985 129 B1**
(45) Date of publication and mention of the grant of the patent: **06.09.2017**
(21) Application number: 14782792.7
(22) Date of filing: 08.04.2014
(51) Int. Cl.: B29C 35/08, B29C 35/10, B29C 35/02, F16L 11/08, B29D 23/00

(54) **PRODUCTION METHOD FOR MOLDED RUBBER HOSE**
HERSTELLUNGSVERFAHREN FÜR EINEN GEFORMTEN GUMMISCHLAUCH
PROCÉDÉ DE FABRICATION DE TUYAU SOUPLE EN CAOUTCHOUC MOULÉ

(30) Priority: 09.04.2013 JP 2013081120
(43) Date of publication of application: 17.02.2016
(73) Proprietor: Bridgestone Corporation, Tokyo 104-8340 (JP)
(72) Inventor: HANAKAGO Ryou, Yokohama-shi Kanagawa 244-8510 (JP)
(74) Representative: Oxley, Robin John George
(86) International application number: PCT/JP2014/060142
(87) International publication number: WO 2014/168129

(56) References cited:
- EP-A1- 0 157 956
- FR-A- 1 080 987
- JP-A- S5 919 138
- JP-A- H08 157 622
- US-A- 5 686 505
- US-A1- 2004 154 732
- US-A1- 2007 227 605

## Description

### Technical Field

The present invention relates to a method for manufacturing a shaped rubber hose having a rubber layer, for use as a hose for transporting a refrigerant in an air conditioner of a vehicle or the like.

### Background Art

Conventionally, a multi-layered hose having a rubber layer (hereinafter also simply referred to as "rubber hose") has been used as a hose for transporting a refrigerant in an air conditioner of a vehicle or the like. Recently in particular, due to the downsizing of an engine chamber and the diversification of an accommodation device, the space for disposing a hose has been limited, so that a shaped rubber hose shaped by bending a rubber hose into a shape corresponding to the space is used in some cases. Rubber hoses for use as a hose for transporting a refrigerant are required to have pressure resistance, typically including an inner tube rubber layer, a reinforcement layer, and a sheath rubber layer. In manufacturing of a shaped rubber hose having a reinforcement layer, the shaped rubber hose accustomed to bending to a desired shape is typically manufactured by forming a straight hose with a rubber layer in a semi-vulcanized state through primary vulcanization and then performing secondary vulcanization of the semi-vulcanized hose in a state that the shape is retained by fitting into a mold having a predetermined bent form, or the like.

The shaped rubber hose manufactured by the two-step vulcanization process as described above has a problem of low shape stability (properties to have a stable shape following the mold) due to restoring force to a straight form, resulting from the secondary vulcanization of the bent straight hose in a semi-vulcanized state. Accordingly, use of a mold in a bent shape identical to a desired shape may cause spreading of the bent part in some cases. Consequently, complicated procedures, such as experimentally making a plurality of molds having a shape bent larger than a desired bent shape to adjust the mold, are required, considering the spreading of the bent part. In addition, a product yield may be decreased due to the occurrence of products not satisfying a standard depending on the semi-vulcanized state in some cases, resulting in increase in the cost and the environmental load.

Typically, the primary vulcanization is performed by treating an unvulcanized rubber hose in a vessel for a predetermined time with a thermal medium such as air or steam controlled at a temperature where the rubber layer is not completely vulcanized. On this occasion, insufficient primary vulcanization may allow the surface of a sheath rubber to be damaged in fitting into a mold, or may cause the sheath rubber to be deformed due to contact with the mold or the like in some cases. On the other hand, excessive progress in vulcanization in the primary vulcanization may cause the straight state to be restored even after the subsequent secondary vulcanization, so that a desired shape cannot be obtained in some cases. Accordingly, the condition setting in the primary vulcanization is difficult.

In response to the difficulty in the condition setting in the primary vulcanization, a method for easily optimizing the semi-vulcanized state in the primary vulcanization is disclosed in Patent Literature 1. In the method, the sheath rubber layer includes 2 layers. The rubber composition of each of the layers is prepared such that the optimum vulcanization time for the outer layer is shortened in comparison with the optimum vulcanization time for the inner layer, and the method for primary heating is specified. FR1080987 discloses a method of forming a shaped rubber hose.

### Prior Art Literature

### Patent Literature

[Patent Literature 1] JP A 2009-58010

### Summary of Invention

### Problems to be solved by the Invention

In the method according to Patent Literature 1, however, the layer structure is complicated and the problem of shape stability in the secondary vulcanization cannot be sufficiently solved. Further, depending on the vulcanization conditions, the progress of vulcanization of the inner rubber layer occurs in some cases. Accordingly, a method for manufacturing a shaped rubber hose, which allows a proper semi-vulcanized state in the primary vulcanization to be more easily obtained, is desired.

An object of the present invention is, therefore, to provide a method for manufacturing a shaped rubber hose including a two-step vulcanization process, allowing a rubber hose in a proper semi-vulcanized state to be easily obtained in a primary vulcanization and the shape stability in a secondary vulcanization to be improved.

### Means for solving the Problems

The object is achieved by a method for manufacturing a shaped rubber hose including the steps of primary vulcanization of an unvulcanized rubber hose formed around an outer periphery of a mandrel to obtain a rubber hose in a semi-vulcanized state and secondary vulcanization of the rubber hose in a semi-vulcanized state held in a desired shape to obtain a shaped rubber hose, wherein the unvulcanized rubber hose has an outermost peripheral unvulcanized rubber layer, and the primary vulcanization is conducted by irradiating an outer peripheral side of the unvulcanized rubber layer with near infrared rays for heating to obtain the rubber hose in a semi-vulcanized state having a higher degree of vulcanization in a vicinity of an outer peripheral surface than in a vicinity of an inner peripheral surface of the rubber hose, wherein the primary vulcanization is performed after formation of a coating of a transparent thermoplastic resin on the outer periphery of the outermost peripheral unvulcanized rubber layer of the unvulcanized rubber hose.

With the irradiation of the outer peripheral side of the unvulcanized rubber layer with near infrared rays, the temperature of the outer peripheral surface of the unvulcanized rubber layer can be rapidly elevated, which is different from the case of primary vulcanization performed by heating with a thermal medium such as air or steam. On the other hand, the temperature rise is suppressed at the mandrel side (i.e. inner peripheral side) of the unvulcanized rubber layer in comparison with at the outer peripheral side, since the near infrared rays hardly reach there. Due to such a primary vulcanization, a rubber hose in a semi-vulcanized state having a higher degree of vulcanization in the vicinity of the outer peripheral surface than in the vicinity of the inner peripheral surface of the rubber hose can be easily obtained. Such a rubber hose in a semi-vulcanized state hardly allows the surface of a rubber layer to be damaged or to be deformed due to contact with the mold or the like in secondary vulcanization, due to the progress in vulcanization in the vicinity of the outer peripheral surface of the rubber hose. With the vulcanization in the vicinity of the inner peripheral surface of the rubber hose in an unprogressed state, many rubber components are vulcanized in a state held in a desired shape in the secondary vulcanization so as to be sufficiently accustomed to bending, resulting in improved shape stability of the shaped rubber hose.

The preferred aspects of the method for manufacturing a shaped rubber hose of the present invention are as follows.

(1) The unvulcanized rubber hose includes a plurality of unvulcanized rubber layers, and the degree of vulcanization of the outermost peripheral rubber layer after the primary vulcanization is higher than the degree of vulcanization of the other rubber layers. Consequently, the degree of vulcanization is controlled for each of the rubber layers in the primary vulcanization, instead of the partial control of the degree of vulcanization of one rubber layer. As a result, a rubber hose in a semi-vulcanized state having a high degree of vulcanization in the vicinity of the outer peripheral surface and a low degree of vulcanization in the vicinity of the inner peripheral surface of the rubber hose can be more easily obtained. In the present specification, the rubber layers inside the outermost peripheral rubber are referred to as "other rubber layers".
(2) The difference in the degree of vulcanization between the outermost peripheral rubber layer and the other rubber layers is 10% or more. The shape stability of the shaped rubber hose can be thereby more improved.
(3) The difference in the degree of vulcanization between the outermost peripheral rubber layer and the other rubber layers is 10% or more and 70% or less. With an excessively large difference in the degree of vulcanization, the formability may be worsened due to the excessively large degree of vulcanization of the outermost peripheral rubber layer in some cases. With an excessively small difference, the formability may be extremely worsened due to the excessively large degree of vulcanization of the other rubber layers in some cases.
(4) The difference in the degree of vulcanization between the outermost peripheral rubber layer and the other rubber layers is 30% or more and 50% or less. A shaped rubber hose having more excellent formability can be thereby obtained.
(5) In the primary vulcanization, heating is performed such that an outer peripheral surface temperature of the outermost peripheral unvulcanized rubber layer is 130 to 200°C. With an excessively low temperature, the progress of vulcanization is not achieved, and with an excessively high temperature, the rubber component may be deteriorated in some cases.
(6) The unvulcanized rubber hose has a reinforcement layer. The method for manufacturing a shaped rubber hose of the present invention is particularly effective.
(7) The secondary vulcanization is performed by heating a rubber hose in a semi-vulcanized state fitted into a mold, held in a predetermined shape. This allows the forming accuracy to be further improved.

### Effects of Invention

In the method for manufacturing a shaped rubber hose including a two-step vulcanization process of the present invention, the primary vulcanization is conducted by irradiating the outer peripheral side of the outermost peripheral unvulcanized rubber layer with near infrared rays for heating to obtain a rubber hose in a semi-vulcanized state having a higher degree of vulcanization in the vicinity of the outer peripheral surface than in the vicinity of the inner peripheral surface of the rubber hose, wherein the primary vulcanization is performed after formation of a coating of a transparent thermoplastic resin on the outer periphery of the outermost peripheral unvulcanized rubber layer of the unvulcanized rubber hose. As a result, the progress in vulcanization in the vicinity of the outer peripheral surface hardly allows the surface of the rubber layer to be damaged or to be deformed due to contact with the mold or the like in the secondary vulcanization. In addition, with the vulcanization in the vicinity of the inner peripheral surface of the rubber hose in an unprogressed state, many rubber components are vulcanized in a state held in a desired shape in the secondary vulcanization so as to be sufficiently accustomed to bending, resulting in improved shape stability of the shaped rubber hose. Accordingly, products not satisfying a standard are hardly produced, resulting in increase in the yield of the product.

### Brief Description of Drawings

[Fig. 1] Fig. 1 is a schematic cross sectional view illustrating a typical example of the method for manufacturing a shaped rubber hose of the present invention.
[Fig. 2] Fig.2 is a schematic cross sectional view illustrating an example of the preferred aspect of the method for manufacturing a shaped rubber hose of the present invention.
[Fig. 3] Fig. 3 is a partially cutout schematic perspective view illustrating a typical example of the hose for use in transporting a refrigerant obtained by the method for manufacturing a shaped rubber hose of the present invention.
[Fig. 4] Fig. 4 is a graph illustrating the temperature change in the primary vulcanization in the method for manufacturing a shaped rubber hose in Example 1.
[Fig. 5] Fig. 5 is a graph illustrating the temperature change in the primary vulcanization in the method for manufacturing a shaped rubber hose in Comparative Example 1.

### Mode for carrying out the Invention

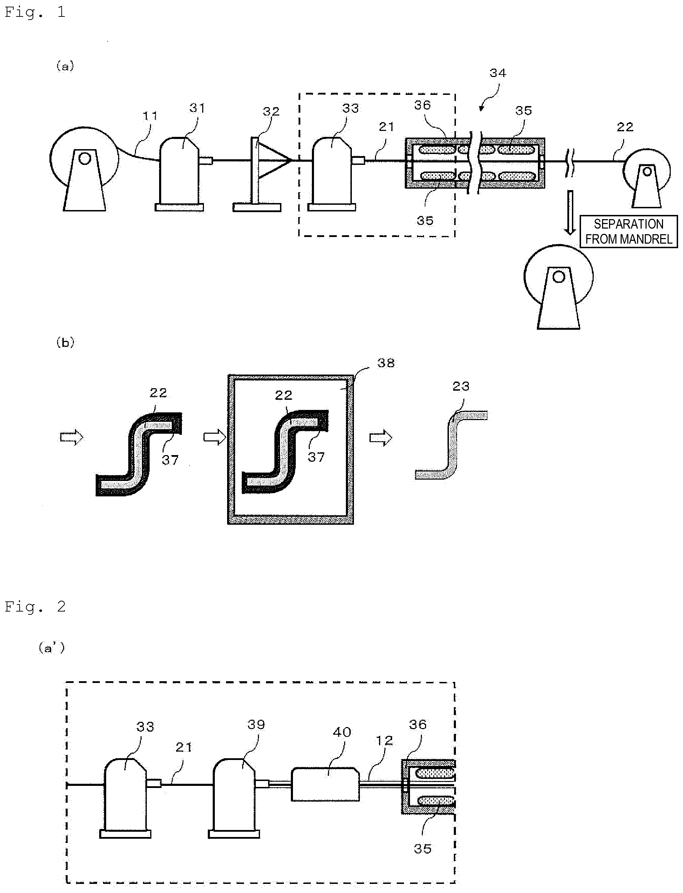

The method for manufacturing a shaped rubber hose of the present invention is described with reference to drawings. Fig. 1 is a schematic cross sectional view illustrating a typical example of the method for manufacturing a shaped rubber hose of the present invention. A process leading to the primary vulcanization is illustrated in Fig. 1(a), and a forming process is illustrated in Fig. 1(b). In the manufacturing method in Fig. 1, first a rubber composition for an inner tube rubber layer is extruded from an extruder 31 to the outer periphery of a mandrel 11 so as to form the inner tube rubber layer. Subsequently a braiding machine 32 winds fiber made of polyethylene terephthalate resin (PET) or the like around the outer periphery of the inner tube rubber layer in a spiral form, for example, so that a reinforcement layer is formed. A rubber composition for a sheath rubber layer is then extruded from an extruder 33 to the outer periphery of the reinforcement layer so as to form the sheath rubber layer. An unvulcanized rubber hose 21 is thus formed.

Subsequently, the unvulcanized rubber hose 21 formed around the outer periphery of the mandrel is introduced into a near infrared ray irradiation device 34 so as to be heated for primary vulcanization. Consequently a rubber hose 22 in a semi-vulcanized state having a higher degree of vulcanization in the vicinity of the outer peripheral surface (the sheath rubber layer as in the description of Fig. 1) than in the vicinity of the inner peripheral surface (the inner tube rubber layer as in the description of Fig. 1) of the rubber hose is obtained. The near infrared ray irradiation device 34 may be any as long as the whole area of the outer peripheral side of the unvulcanized rubber hose 21 can be irradiated with near infrared rays for a predetermined time. For example, in Fig. 1(a), a plurality of near infrared ray lamps 35 are disposed inside a tubular body 36 having a mirror inner surface. The irradiation of near infrared rays may be a continuous or batch operation. In a continuous operation, the length of the tubular body 36 and the transportation speed of the unvulcanized rubber hose 21 may be adjusted to control the irradiation time. Due to the near infrared ray irradiation to the outer peripheral side of the unvulcanized rubber hose 21, the temperature of the outer peripheral surface of the unvulcanized rubber hose 21 can be rapidly elevated. On the other hand, in comparison with in the vicinity of the outer peripheral surface, the temperature rise is suppressed at the mandrel side of the rubber hose 21, where the near infrared rays hardy reach. In the case of conventional heating with a thermal medium such as air or steam, the long heating time causes the similar temperature rise over the whole unvulcanized rubber hose, so that the control to make a difference between the degree of vulcanization in the vicinity of the outer peripheral surface and the degree of vulcanization in the vicinity of the inner peripheral surface is difficult. In contrast, the primary vulcanization in the manufacturing method of the present invention allows a rubber hose 22 in a semi-vulcanized state having a higher degree of vulcanization in the vicinity of the outer peripheral surface than in the vicinity of the inner peripheral surface of the rubber hose to be easily obtained. In the present invention, the range in the vicinity of the outer peripheral surface of the rubber hose is typically 0.01 to 1.0 mm from the outer peripheral surface of the rubber hose toward the inner peripheral side, preferably 0.01 to 0.5 mm, and the range in the vicinity of the inner peripheral surface of the rubber hose is 0.01 to 1.0 mm from the inner peripheral surface of the rubber hose toward the outer peripheral side, preferably 0.01 to 0.5 mm, though not particularly limited as long as the object of the present invention is achieved.

On completion of the primary vulcanization, the rubber hose 22 in a semi-vulcanized state is typically wound on a drum after pulling out the mandrel (separation from mandrel) so as to be temporarily stored until execution of the secondary vulcanization (Fig. 1(a)).

Subsequently, the rubber hose 22 in a semi-vulcanized state cut into a desired length is, for example, fitted into a mold 37 such that a predetermined shape is retained. The hose in that state is then placed in a vulcanization device 38 so as to be heated for a predetermined time for the secondary vulcanization. Subsequently the mold is detached, and a shaped rubber hose 23 is thereby manufactured (Fig. 1(b)).

The method for retaining the rubber hose 22 in a semi-vulcanized state in a predetermined shape may be any, and examples of the method include a method using a bent mandrel and a method using a plurality of clamps. In order to further improve the forming accuracy, preferably a predetermined shape is retained by fitting into a mold 37 as shown in Fig. 1(b). As the vulcanization device 38, any known vulcanization device may be used. For example, a heating furnace which performs heating by controlling the temperature of a thermal medium such as air or steam may be used.

The rubber hose 22 in a semi-vulcanized state as described above hardly allows the rubber layer surface to be damaged when fitted into the mold 37 or deformed due to contact with the mold or the like in secondary vulcanization, due to the progress in vulcanization in the vicinity of the outer peripheral surface of the rubber hose. With the vulcanization in the vicinity of the inner peripheral surface of the rubber hose in an unprogressed state, many rubber components are vulcanized in a state held in a desired shape in the secondary vulcanization so as to be sufficiently accustomed to bending, resulting in improved shape stability.

In the manufacturing method of the present invention, the unvulcanized rubber hose 21 may have any structure on the inner peripheral side, as long as having an unvulcanized rubber layer at the outermost periphery (the sheath rubber layer as in the description of Fig. 1). In other words, the inner tube rubber layer and the reinforcement layer as in the description of Fig. 1 may be omitted. Alternatively, a resin layer may be formed on the inner peripheral side of the inner tube rubber layer as in the description of Fig. 1 or other rubber layers, a reinforcement layer, an adhesive layer, or the like may be further formed between the reinforcement layer and the sheath rubber layer. In the present invention, in the case of having a resin layer at the innermost periphery of the rubber hose, the vicinity of the inner peripheral surface of the rubber hose means the vicinity of the inner peripheral surface of a rubber layer formed on the innermost peripheral side of rubber layers (the inner tube rubber layer as in the description of Fig. 1). In the primary vulcanization, in comparison with controlling the degree of vulcanization in the vicinity of the outer peripheral surface and in the vicinity of the inner peripheral surface of a one-layer rubber layer, controlling the degree of vulcanization for each rubber layer allows a rubber hose in a semi-vulcanized state having a high degree of vulcanization in the vicinity of the outer peripheral surface and a low degree of vulcanization in the vicinity of the inner peripheral surface of the rubber hose to be more easily obtained. Accordingly, the unvulcanized rubber hose 21 preferably has a plurality of unvulcanized rubber layers as in the description of Fig. 1, and the degree of vulcanization of the outermost peripheral rubber layer (the sheath rubber layer as in the description of Fig. 1) preferably has a higher degree of vulcanization than the other rubber layers (the inner tube rubber layer as in the description of Fig. 1) after the primary vulcanization.

In such a case, in order to further improve the shape stability of the shaped rubber hose after the secondary vulcanization, the difference in the degree of vulcanization between the outermost peripheral rubber layer and the other rubber layers is preferably 10% or more, more preferably 10% or more and 70% or less, particularly preferably 30% or more and 50% or less. With an excessively small difference in the degree of vulcanization, the formability of the shaped rubber hose may be extremely worsened in some cases. With an excessively large difference in the degree of vulcanization, the formability may be worsened in some cases due to the excessively large degree of vulcanization of the outer peripheral side. With a difference in the degree of vulcanization in the range described above, a shaped rubber hose more excellent in formability can be obtained. In addition, with an excessively large degree of vulcanization of the outermost peripheral rubber layer (e.g. the sheath rubber layer), the formability may be worsened in some cases, while with an excessively small degree of vulcanization, external flaws may easily occur in some cases. Accordingly, the degree of vulcanization of the outermost peripheral rubber layer is preferably 30 to 80%. Furthermore, with an excessively small degree of vulcanization of the other rubber layers (e.g. the inner tube rubber layer), the rubber layer may be too soft in some cases, while with an excessively large degree of vulcanization, the formability may be extremely worsened in some cases. Accordingly, the degree of vulcanization of the other rubber layers is preferably 10 to 40%. In the present invention, assuming a degree of vulcanization of 0% for the lowest value M_{L} of the torque of a rubber, and a degree of vulcanization of 100% for the highest value M_{H} obtained by a curelastometer, the degree of vulcanization is calculated from the difference between the highest value and the lowest value.

The layer thickness of the outermost peripheral rubber layer (the sheath rubber layer as in the description of Fig. 1) or the inner tube rubber layer may be, for example, 0.5 to 2.5 mm, though not particularly limited thereto. Further, the layer thickness of the reinforcement layer may be appropriately set, and may be, for example, 0.5 to 2.5 mm.

In the manufacturing method of the present invention, the temperature for the primary vulcanization may be freely set depending on the appropriate vulcanization temperature of a rubber composition for use. With an excessively low temperature, the progress of vulcanization hardly occurs, while with an excessively high temperature, the deterioration of rubber components and the breakage of resin fiber such as PET fiber may occur in some cases when used in the reinforcement layer. Accordingly, in the primary vulcanization, the outermost peripheral unvulcanized rubber layer is heated to have an outer peripheral surface temperature of preferably 130 to 200°C, more preferably 130 to 180°C.

In the manufacturing method of the present invention, the outermost peripheral unvulcanized rubber layer of the unvulcanized rubber hose 21 may be exposed to atmosphere as illustrated in Fig. 1, though the exposure involves foaming in some cases depending on the rubber composition.

In order to prevent such foaming, the primary vulcanization is performed after formation of a coating of transparent thermoplastic resin on the outer periphery of the outermost peripheral unvulcanized rubber layer of the unvulcanized rubber hose 21.

Fig. 2 is a schematic cross sectional view illustrating an example of the preferred aspect of the method for manufacturing a shaped rubber hose of the present invention, with alterations in the process surrounded by broken lines in Fig. 1. In other words, as in the description of Fig. 1, after formation of the unvulcanized rubber hose 21 around the outer periphery of a mandrel, a transparent thermoplastic resin composition (resin composition for plastic mold) is extruded onto the outer periphery of the outermost peripheral sheath rubber layer from an extruder 39, and then passed through a cooling device 40 so as to form a coating made of transparent thermoplastic resin (a plastic mold 12). Subsequently, the primary vulcanization is performed by the near infrared ray irradiation device 34 as in the description of Fig. 1. The plastic mold 12 made of transparent thermoplastic resin allows near infrared rays to pass through, so that the outer peripheral surface of the outermost peripheral sheath rubber layer can be sufficiently heated. The rubber components coated with the plastic mold 12 is prevented from foaming in vulcanization. In addition, in the case of using an organic peroxide as vulcanizing agent as described below in particular, oxygen as an inhibiting factor for vulcanization can be thereby blocked. The plastic mold 12 typically having a low flexibility is removed prior to the secondary vulcanization.

The manufacturing method of the present invention may be applied to any hose, as long as the shaped rubber hose has a rubber layer. The manufacturing method of the present invention is particularly effective in manufacturing a shaped rubber hose having a reinforcement layer as illustrated in Fig. 1, which requires a two-step vulcanization process, not allowing a one-step vulcanization process such as injection of a rubber composition directly into a mold to be employed.

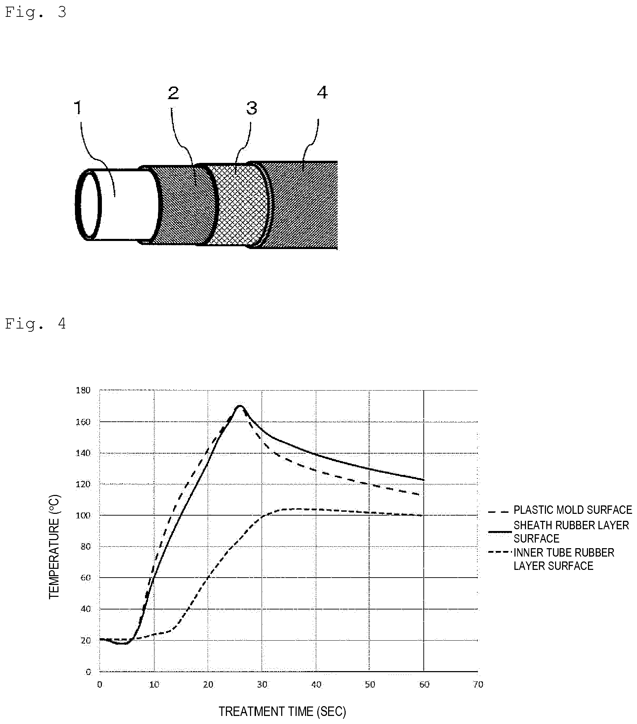

An example of the hose structure for use in transporting a refrigerant of an air conditioner for a vehicle is illustrated in Fig. 3 as a typical example of a shaped rubber hose obtained by the manufacturing method of the present invention. The hose for transporting a refrigerant illustrated in Fig. 3 includes an inner resin layer 1, an inner tube rubber layer 2, a reinforcement layer 3, and a sheath rubber layer 4. The inner resin layer 1 is a layer for preventing the refrigerant to be transported from volatilizing. Since such a hose for transporting a refrigerant is required to have a complicated bent shape to be fitted into a space in an engine chamber of a vehicle, the method for manufacturing a shaped rubber hose of the present invention is particularly effective to apply to a shaped rubber hose.

In the manufacturing method of the present invention, the rubber component for use in the composition to form a rubber layer is not particularly limited. For example, natural rubber, butadiene rubber, styrene-butadiene rubber, chloroprene rubber, nitrile rubber, hydrogenated nitrile rubber (HNBR), butyl rubber, brominated isobutylene-paramethyl styrene (BIMS), ethylene propylene rubber (EPM), ethylene-propylene-diene rubber (EPDM), chlorosulfonated polyethylene, acrylic rubber (ACM), ethylene-acrylic copolymer (AEM), silicone rubber, fluororubber, urethane rubber, and a mixture thereof may be used. As a vulcanizing agent, a known agent may be also used. Examples of the vulcanizing agent to be blended include a sulfur-based vulcanizing agent, and an organic peroxide such as dicumyl peroxide, dibutyl peroxide, and 1,3-bis(butylperoxy-isopropyl)benzene.

In particular, the composition to form the outermost peripheral rubber layer (the sheath rubber layer in Fig.1) employs a rubber component such as natural rubber, butadiene rubber, styrene-butadiene rubber, chloroprene rubber, nitrile rubber, hydrogenated nitrile rubber (HNBR), butyl rubber, brominated isobutylene-paramethyl styrene (BIMS), ethylene propylene rubber (EPM), ethylene-propylene-diene rubber (EPDM), acrylic rubber (ACM), ethylene-acrylic copolymer (AEM), which are used singly or as a mixture thereof, so that heat resistance can be achieved after vulcanization. Preferably an organic peroxide such as dicumyl peroxide, dibutyl peroxide, and 1,3-bis(butylperoxy-isopropyl)benzene is blended as vulcanizing agent.

In the manufacturing method of the present invention, a reinforcement layer may be formed without particular limitations. For example, known material including a resin fiber of PET, vinylon, polyamide, polyethylene naphthalate (PEN), aramid or the like, and a metal wire of steel or the like may be used. In addition, an inner resin layer may be formed without particular limitations, of which selection may be performed considering gas barrier properties and the like. For example, a polyamide resin (e.g. nylon), an ethylene-vinyl alcohol copolymer, and a fluororesin may be used.

In the manufacturing method of the present invention, the output and the wavelength in the near infrared ray irradiation are not particularly limited as long as the effect of the present invention can be achieved. A near infrared ray lamp emitting light with a wavelength range from 800 to 3000 nm may be employed, and, for example, a halogen heater may be used. With a wavelength less than 800 nm, a degree of vulcanization does not sufficiently rise, while with a wavelength more than 3000 nm, the light is absorbed into the coating, so that a degree of vulcanization of the rubber itself does not sufficiently rise.

In the manufacturing method of the present invention, the mandrel may be used without particular limitations. A flexible thermoplastic resin having heat resistance, causing no deformation at the vulcanization temperature, is preferred, and a mandrel made of polyamide resin (e.g. nylon), polyphenylene oxide resin, fluororesin, rubber, or the like may be used. When using a coating (plastic mold) of transparent thermoplastic resin, a known transparent thermoplastic resin may be used without particular limitations, as long as the transparent thermoplastic resin has a specific hardness and transparency at the vulcanization temperature and can prevent the foaming of the rubber layer. For example, a polyolefin (TPX) made by polymerization of 4-methylpenten-1, a polyamide, a polypropylene, or the like may be used.

### Examples

With reference to Examples, the present invention will be described below.

### 1. Comparison of primary vulcanization conditions in the method for manufacturing a shaped rubber hose

### [Example 1 and Comparative Example 1]

A butyl rubber composition for an inner tube rubber layer was extruded from an extruder to the outer periphery of a mandrel so as to form the inner tube rubber layer (layer thickness: 1.3 mm). Subsequently a braiding machine wound PET fiber around the outer periphery of the inner tube rubber layer in a spiral form so as to form a reinforcement layer (layer thickness: 1.6 mm). An EPDM composition (blended with an organic peroxide) for a sheath rubber layer was then extruded to the outer periphery of the reinforcement layer so as to form the sheath rubber layer (layer thickness: 1.1 mm). An unvulcanized rubber hose was thus obtained (refer to Fig. 1(a)). Subsequently, TPX was extruded on the outer periphery of the sheath rubber layer of the unvulcanized rubber hose, and then cooled to form a plastic mold (refer to Fig. 2). The unvulcanized rubber hose having the plastic mold formed on the outer periphery was cut into a sample with a diameter of 30 mm and a length of 300 mm, which was irradiated with near infrared rays for the primary vulcanization. The change in the surface temperature of each layer in the primary vulcanization was inspected (Example 1). In addition, a similar sample was heated in a heating furnace using air as the thermal medium for the primary vulcanization, and the change in the surface temperature of each layer in the primary vulcanization was inspected (Comparative Example 1).

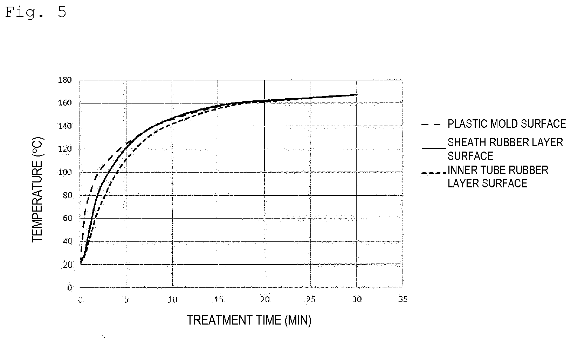

As illustrated in Fig. 4 and Fig. 5, in the primary vulcanization using near infrared rays in Example 1, the surface temperature of the plastic mold and the sheath rubber layer reached 170°C in 26 seconds, with the surface temperature of the inner tube rubber layer at 85°C at that time. In contrast, in the primary vulcanization using a heating furnace in Comparative Example 1, the temperature of the whole was more slowly elevated than in Example 1, without large difference in the surface temperature between the sheath rubber layer and the inner tube rubber layer. Both of the temperatures reached 160°C in about 20 minutes.

In Example 1, after the primary vulcanization (the surface temperature of the sheath rubber layer: 150 to 170°C, treated for 5 minutes), the rubber hose sample in a semi-vulcanized state had a degree of vulcanization of the sheath rubber layer of 60%, and a degree of vulcanization of the inner tube rubber layer of 30%. In contrast, in Comparative Example 1, after the primary vulcanization (the surface temperature of the sheath rubber layer: 120 to 140°C, treated for 40 minutes), the rubber hose sample in a semi-vulcanized state had a degree of vulcanization of the sheath rubber layer of 60%, and a degree of vulcanization of the inner tube rubber layer of 80%. The calculation method of the degree of vulcanization is as described above.

The rubber hose in a semi-vulcanized state in each of Example 1 and Comparative Example 1 fitted to a mold having an S-shaped mold was placed in an air-circulating heating furnace to be heated at 160°C for 30 minutes for the secondary vulcanization. With the mold removed after cooling, a shaped rubber hose was obtained (refer to Fig. 1(b)). Any of the shaped rubber hose thus obtained had no damage on the surface. The shaped rubber hose in Example 1 had less reversion at the bent part and higher shape stability than those of the shaped rubber hose in Comparative Example 1.

As described above, the manufacturing method of the present invention allows a rubber hose in a semi-vulcanized state having a higher degree of vulcanization in the vicinity of the outer peripheral surface (the sheath rubber layer in Example 1) than in the vicinity of the inner peripheral surface (the inner tube rubber layer in Example 1) of the rubber hose to be easily obtained in the primary vulcanization. It was shown that the rubber layer surface was hardly damaged or deformed in the secondary vulcanization, achieving improvement in shape stability of a shaped rubber hose.

### 2. Influence of the difference in the degree of vulcanization between the sheath rubber layer and the inner tube rubber layer in the primary vulcanization in the method for manufacturing a shaped rubber hose

### [Examples 2 to 13, and Comparative Examples 2 and 3]

Each of the similar samples as in Example 1 was subjected to the primary vulcanization under the conditions for achieving the degree of vulcanization of the sheath rubber layer and the inner tube rubber layer as described in Table 1, and then to the secondary vulcanization as in the above for evaluation of the formability and the appearance of the shaped rubber hose. The formability was evaluated as ⊚ when forming was easy with almost no spring back (reversion at a bent part), having no problem in forming (variation in rubber thickness, and the like), as ○ when forming was possible with some spring back, having almost no problem in forming, as Δ when forming was rather difficult with spring back, having several problems in forming, and as × when normal forming was impossible, having problems in forming. The appearance was evaluated as ⊚ when having almost no damage and no dent caused by contact with a mold, as ○ when having slight amount of small dents caused by contact with a mold, as Δ when having damages and small dents caused by contact with a mold, and as × when having striking damages and large dents caused by contact with a mold. The results are shown in Table 1.

**[Table 1]**

| | | Example 2 | Example 3 | Example 4 | Example 5 | Example 6 | Example 7 | Example 8 | Example 9 | Example 10 | Example 11 | Example 12 | Example 13 | Comparative Example 2 | Comparative Example 3 |
|---|---|---|---|---|---|---|---|---|---|---|---|---|---|---|---|
| Degree of vulcanization (%) | Sheath rubber layer | 30 | 50 | 50 | 50 | 60 | 70 | 80 | 80 | 70 | 45 | 90 | 20 | 50 | 30 |
| | Inner tube rubber layer | 20 | 40 | 30 | 20 | 20 | 20 | 10 | 40 | 20 | 40 | 10 | 10 | 50 | 50 |
| Difference in degree of vulcanization (outer layer-inner layer) (%) | | 10 | 10 | 20 | 30 | 40 | 50 | 70 | 40 | 50 | 5 | 80 | 10 | 0 | -20 |
| Evaluation | Formability | ○ | ○ | ○ | ○ | ⊚ | ○ | ○ | ⊚ | ○ | Δ | Δ | ○ | × | × |
| | Appearance | Δ | ○ | ○ | ○ | ⊚ | ⊚ | ⊚ | ○ | ⊚ | Δ | ⊚ | Δ | ○ | × |

As shown in Table 1, it was found that in the primary vulcanization in the method for manufacturing a shaped rubber hose, when the difference in the degree of vulcanization, i.e. the degree of vulcanization of the sheath rubber layer minus the degree of vulcanization of the inner tube rubber layer, was plus, the formability and the appearance were Δ or better; when the difference in the degree of vulcanization was 10 to 70%, the formability and the appearance were satisfactory; when the difference in the degree of vulcanization was 30 to 50%, the formability and the appearance were more satisfactory.

The present invention is not limited to the structure in the mode for carrying out the invention or to the Examples, and various modifications may be made without departing from the scope of the invention as defined in the claims.

### Industrial Applicability

The present invention allows a shaped rubber hose such as a hose for transporting a refrigerant in an air conditioner of a vehicle or the like to be manufactured at a higher product yield, and the manufacturing cost and the environmental load to be reduced.

### Reference Signs List

- 11: Mandrel
- 12: Plastic mold
- 21: Unvulcanized rubber hose
- 22: Rubber hose in semi-vulcanized state
- 23: Shaped rubber hose
- 31, 33 and 39: Extruder
- 32: Braiding machine
- 34: Near infrared ray irradiation device
- 35: Near infrared ray lamp
- 36: Tubular body
- 37: Mold
- 38: Vulcanization device
- 40: Cooling device

## Claims

1. A method for manufacturing a shaped rubber hose (23) comprising the steps of:
primary vulcanization of an unvulcanized rubber hose (21) formed around an outer periphery of a mandrel (11) to obtain a rubber hose (22) in a semi-vulcanized state; and
secondary vulcanization of the rubber hose in a semi-vulcanized state (22) held in a desired shape to obtain a shaped rubber hose (23); wherein the unvulcanized rubber hose (21) has an outermost peripheral unvulcanized rubber layer; and
the primary vulcanization is conducted by irradiating an outer peripheral side of the unvulcanized rubber layer with near infrared rays for heating to obtain the rubber hose in a semi-vulcanized state (22) having a higher degree of vulcanization in a vicinity of an outer peripheral surface than in a vicinity of an inner peripheral surface of the rubber hose, wherein the primary vulcanization is performed after formation of a coating of a transparent thermoplastic resin (12) on the outer periphery of the outermost peripheral unvulcanized rubber layer of the unvulcanized rubber hose (21).

2. The method for manufacturing a shaped rubber hose according to claim 1, wherein
the unvulcanized rubber hose includes a plurality of unvulcanized rubber layers, and
the degree of vulcanization of the outermost peripheral rubber layer after the primary vulcanization is higher than the degree of vulcanization of other rubber layers.

3. The method for manufacturing a shaped rubber hose according to claim 2, wherein a difference in the degree of vulcanization between the outermost peripheral rubber layer and the other rubber layers is 10% or more.

4. The method for manufacturing a shaped rubber hose according to claim 2, wherein a difference in the degree of vulcanization between the outermost peripheral rubber layer and the other rubber layers is 10% or more and 70% or less.

5. The method for manufacturing a shaped rubber hose according to claim 2, wherein a difference in the degree of vulcanization between the outermost peripheral rubber layer and the other rubber layers is 30% or more and 50% or less.

6. The method for manufacturing a shaped rubber hose according to any one of claims 1 to 5, wherein heating is performed such that an outer peripheral surface temperature of the outermost peripheral unvulcanized rubber layer is 130 to 200°C in the primary vulcanization.

7. The method for manufacturing a shaped rubber hose according to any one of claims 1 to 6, wherein the unvulcanized rubber hose has a reinforcement layer.

8. The method for manufacturing a shaped rubber hose according to any one of claims 1 to 7, wherein the secondary vulcanization is performed by heating a rubber hose in a semi-vulcanized state fitted into a mold, held in a predetermined shape.

## Patentansprüche

1. Herstellungsverfahren für einen geformten Gummischlauch (23), folgende Schritte beinhaltend:
Primärvulkanisierung eines unvulkanisierten Gummischlauchs (21), welcher rund um einen äußeren Umfang eines Dorns (11) geformt wird, um einen Gummischlauch (22) in einem halbvulkanisierten Zustand zu erhalten; und
Sekundärvulkanisierung des Gummischlauchs in einem halbvulkanisierten Zustand (22), welcher in einer gewünschten Form gehalten wird, um einen geformten Gummischlauch (23); zu erhalten;
wobei der unvulkanisierte Gummischlauch (21) eine äußerste Umfangsschicht aus unvulkanisiertem Gummi besitzt; und
die Primärvulkanisierung durch Bestrahlung einer äußeren Umfangsseite der unvulkanisierten Gummischicht mit Nah-Infrarotstrahlen zur Erhitzung durchgeführt wird, um den Gummischlauch in einem halbvulkanisierten Zustand (22) zu erhalten, welcher einen höheren Vulkanisierungsgrad in der Nähe einer äußeren Umfangsoberfläche als in der Nähe einer inneren Umfangsoberfläche des Gummischlauchs besitzt, wobei die Primärvulkanisierung nach Bildung einer Beschichtung aus einem transparenten Thermoplastharz (12) am äußeren Umfang der äußersten Umfangsschicht aus unvulkanisiertem Gummi des unvulkanisierten Gummischlauchs (21) vorgenommen wird.

2. Herstellungsverfahren für einen geformten Gummischlauch nach Anspruch 1, bei welchem
der unvulkanisierte Gummischlauch eine Vielzahl von unvulkanisierten Gummischichten beinhaltet, und
der Vulkanisierungsgrad der äußersten Umfangsgummischicht nach der Primärvulkanisierung höher ist als der Vulkanisierungsgrad anderer Gummischichten.

3. Herstellungsverfahren für einen geformten Gummischlauch nach Anspruch 2, bei welchem ein Unterschied im Vulkanisierungsgrad zwischen der äußersten Umfangsgummischicht und den anderen Gummischichten 10 % oder darüber beträgt.

4. Herstellungsverfahren für einen geformten Gummischlauch nach Anspruch 2, bei welchem ein Unterschied im Vulkanisierungsgrad zwischen der äußersten Umfangsgummischicht und den anderen Gummischichten 10% oder mehr und 70% oder weniger beträgt.

5. Herstellungsverfahren für einen geformten Gummischlauch nach Anspruch 2, bei welchem ein Unterschied im Vulkanisierungsgrad zwischen der äußersten Umfangsgummischicht und den anderen Gummischichten 30 % oder mehr und 50 % oder weniger beträgt.

6. Herstellungsverfahren für einen geformten Gummischlauch nach einem der Ansprüche 1 bis 5, bei welchem die Erhitzung so vorgenommen wird, dass eine Temperatur der äußeren Umfangsoberfläche der äußersten unvulkanisierten Umfangsgummischicht 130 bis 200 °C bei der Primärvulkanisierung beträgt.

7. Herstellungsverfahren für einen geformten Gummischlauch nach einem der Ansprüche 1 bis 6, bei welchem der unvulkanisierte Gummischlauch eine Verstärkungsschicht besitzt.

8. Herstellungsverfahren für einen geformten Gummischlauch nach einem der Ansprüche 1 bis 7, bei welchem die Sekundärvulkanisierung durch Erhitzung eines Gummischlauchs in einem halbvulkanisierten Zustand vorgenommen wird, der in eine Form eingelegt ist und in einer vorbestimmten Form gehalten wird.

## Revendications

1. Procédé de fabrication d'un tuyau souple en caoutchouc mis en forme (23) comprenant les étapes de :
vulcanisation primaire d'un tuyau souple en caoutchouc non vulcanisé (21) formé autour d'une périphérie extérieure d'un mandrin (11) afin d'obtenir un tuyau souple en caoutchouc (22) dans un état semi-vulcanisé ; et
vulcanisation secondaire du tuyau souple en caoutchouc dans un état semi-vulcanisé (22) maintenu dans une forme souhaitée afin d'obtenir un tuyau souple en caoutchouc mis en forme (23) ; dans lequel
le tuyau souple en caoutchouc non vulcanisé (21) présente une couche de caoutchouc non vulcanisé périphérique la plus extérieure ; et
la vulcanisation primaire est mise en oeuvre grâce à une étape consistant à irradier un côté périphérique externe de la couche de caoutchouc non vulcanisé avec des rayons du proche infrarouge en vue d'un chauffage destiné à obtenir le tuyau souple en caoutchouc dans un état semi-vulcanisé (22) présentant, à proximité d'une surface périphérique extérieure, un degré de vulcanisation supérieur à celui présenté à proximité d'une surface périphérique intérieure du tuyau souple en caoutchouc, dans lequel la vulcanisation primaire est mise en oeuvre après formation d'un revêtement constitué d'une résine thermoplastique transparente (12) sur la périphérie extérieure de la couche de caoutchouc non vulcanisé périphérique la plus extérieure du tuyau souple en caoutchouc non vulcanisé (21).

2. Procédé de fabrication un tuyau souple en caoutchouc mis en forme selon la revendication 1, dans lequel
le tuyau souple en caoutchouc non vulcanisé comprend une pluralité de couches de caoutchouc non vulcanisé, et
le degré de vulcanisation de la couche de caoutchouc périphérique la plus extérieure après la vulcanisation primaire est supérieur au degré de vulcanisation d'autres couches de caoutchouc.

3. Procédé de fabrication d'un tuyau souple en caoutchouc mis en forme selon la revendication 2, dans lequel une différence de degré de vulcanisation entre la couche de caoutchouc périphérique la plus extérieure et les autres couches de caoutchouc est supérieure ou égale à 10 %.

4. Procédé de fabrication d'un tuyau souple en caoutchouc mis en forme selon la revendication 2, dans lequel une différence de degré de vulcanisation entre la couche de caoutchouc périphérique la plus extérieure et les autres couches de caoutchouc est supérieure ou égale à 10 % et inférieure ou égale à 70 %.

5. Procédé de fabrication d'un tuyau souple en caoutchouc mis en forme selon la revendication 2, dans lequel une différence de degré de vulcanisation entre la couche de caoutchouc périphérique la plus extérieure et les autres couches de caoutchouc est supérieure ou égale à 30 % et inférieure ou égale à 50 %.

6. Procédé de fabrication d'un tuyau souple en caoutchouc mis en forme selon l'une quelconque des revendications 1 à 5, dans lequel une étape de chauffage est mise en oeuvre de telle manière qu'une température de surface périphérique extérieure de la couche de caoutchouc non vulcanisé périphérique la plus extérieure est comprise entre 130 et 200°C lors de la vulcanisation primaire.

7. Procédé de fabrication d'un tuyau souple en caoutchouc mis en forme selon l'une quelconque des revendications 1 à 6, dans lequel le tuyau souple en caoutchouc non vulcanisé présente une couche de renforcement.

8. Procédé de fabrication d'un tuyau souple en caoutchouc mis en forme selon l'une quelconque des revendications 1 à 7, dans lequel la vulcanisation secondaire est mise en oeuvre grâce à une étape consistant à chauffer un tuyau souple en caoutchouc dans un état semi-vulcanisé mis en place dans un moule et maintenu dans une forme prédéterminée.
